(19) **Europäisches Patentamt / European Patent Office / Office européen des brevets**

(11) **EP 3 960 776 B1**

(12) **EUROPEAN PATENT SPECIFICATION**

(45) Date of publication and mention
of the grant of the patent:
**18.02.2026 Bulletin 2026/08**

(21) Application number: **20795527.9**

(22) Date of filing: **30.01.2020**

(51) International Patent Classification (IPC):
**C08F 6/08** *(2006.01)*        **C08F 10/06** *(2006.01)*

(52) Cooperative Patent Classification (CPC):
(C-Sets available)
**C08F 6/02; C08F 110/06;** Y02P 20/52        (Cont.)

(86) International application number:
**PCT/JP2020/003395**

(87) International publication number:
**WO 2020/217628 (29.10.2020 Gazette 2020/44)**

(54) **METHOD FOR PRODUCING PROPYLENE POLYMER**

VERFAHREN ZUR HERSTELLUNG VON PROPYLENPOLYMER

PROCÉDÉ DE PRODUCTION DE POLYMÈRE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2019 JP 2019083779**

(43) Date of publication of application:
**02.03.2022 Bulletin 2022/09**

(73) Proprietor: **SUMITOMO CHEMICAL COMPANY, LIMITED**
**Tokyo 103-6020 (JP)**

(72) Inventor: **YAMADA, Hidekazu**
**Ichihara-shi, Chiba 299-0195 (JP)**

(74) Representative: **Winter, Brandl - Partnerschaft mbB**
**Alois-Steinecker-Straße 22**
**85354 Freising (DE)**

(56) References cited:
**EP-A1- 0 023 018        EP-A1- 0 069 461**
**WO-A1-2016/159044        JP-A- H0 445 103**
**JP-A- S4 987 783        JP-B1- S44 841**

Remarks:
The file contains technical information submitted after the application was filed and not included in this specification

(52) Cooperative Patent Classification (CPC): (Cont.)

C-Sets
**C08F 6/02, C08L 23/12;**
**C08F 110/06, C08F 4/6465;**
**C08F 110/06, C08F 4/651;**
**C08F 110/06, C08F 4/6565**

## Description

## Technical Field

The present invention relates to a method for producing a propylene polymer.

## Background Art

In a case where a propylene polymer is used for electronic component applications such as a separator film and a capacitor film, a propylene polymer in which a catalyst residue in the propylene polymer has been reduced is required.

In JP S60 139708 A, a method for reducing a catalyst residue in a propylene polymer by washing a polymerized propylene polymer with a phosphoric acid triester and then washing the propylene polymer with a liquid hydrocarbon is described.

In JP 2010-059262 A, a method for reducing a catalyst residue in a propylene polymer by washing a polymerized propylene polymer with liquid propylene including a secondary alcohol having 3 to 8 carbon atoms is described.

EP 0 023 018 A1 discloses the purification of polypropylene prepared with a Ziegler-Natta catalyst. The deashing agent used in the examples is n-butyl carbitol and/or propylene oxide.

EP 0 069 461 A1 discloses the purification of polypropylene prepared with a Ziegler-Natta catalyst. The deashing agent used in the examples is isopropyl alcohol (IPA).

JP S49 87783 A discloses the purification of polypropylene prepared with a Ziegler-Natta catalyst. The deashing agent used in the examples is butyl alcohol.

## Summary of Invention

## Technical Problem

In the method described in JP S60 139708 A, since a plurality of catalyst residue removing agents are used, the process of reducing a catalyst residue in a propylene polymer is complicated.

In the method described in JP 2010-059262 A, reduction of a catalyst residue in a propylene polymer was not sufficient.

Thus, an object of the present invention is to provide a method for producing a propylene polymer, the method being capable of conveniently and sufficiently reducing a catalyst residue in a propylene polymer.

Solution to Problem

The present invention is defined by the subject-matter of the claims.

Advantageous Effects of Invention

According to the present invention, a method for producing a propylene polymer, the method being capable of conveniently and sufficiently reducing a catalyst residue in the propylene polymer, can be provided.

## Description of Embodiments

1. The present invention is a method for producing a propylene polymer, the method comprises the following step (1) and the following step (2):

step (1):
a step of polymerizing propylene in the presence of a catalyst to obtain a propylene polymer;
step (2):

a step of washing the propylene polymer obtained in step (1) with a deashing agent at 20°C to 100°C to remove a catalyst residue in the propylene polymer, the step satisfying the following formula (1):

$$4.4 \times \log(T) - \log(EW) > 0.34 \times (\delta(W) - \delta(E)) \qquad (1)$$

wherein T represents a temperature (°C) at the time of washing the propylene polymer with the deashing agent;

EW represents a water content (wt%) in the deashing agent, and the EW is 0.01% by weight or more and 0.1% by weight or less;

$\delta(W)$ represents a Hansen solubility parameter of water; and

$\delta(E)$ represents a Hansen solubility parameter of the deashing agent,

wherein the catalyst used in step (1) is a catalyst obtained by contacting a solid catalyst for olefin polymerization with a co-catalyst, and the solid catalyst for olefin polymerization contains titanium, magnesium, a halogen atom and an internal electron donor.

[Step (1)]

Step (1) is a step of polymerizing propylene in the presence of a catalyst to obtain a propylene polymer.

The catalyst is a catalyst obtained by bringing a solid catalyst for olefin polymerization into contact with a co-catalyst. Examples of the co-catalyst include an organoaluminum compound and an electron donating compound.

Examples of the solid catalyst for olefin polymerization include a Ziegler type catalyst; a Ziegler-Natta type catalyst; a catalyst composed of a transition metal compound of Group 4 in the Periodic Table having a cyclopentadienyl ring and an alkylaluminoxane; a catalyst composed of a transition metal compound of Group 4 in the Period Table having a cyclopentadienyl ring, a compound that reacts with the transition metal compound of Group 4 in the Periodic Table to form an ionic complex, and an organoaluminum compound; and a catalyst obtained by supporting catalyst components (for example, a transition metal compound of Group 4 in the Periodic Table having a cyclopentadienyl ring, a compound forming an ionic complex, and an organoaluminum compound) on inorganic particles (for example, silica or clay mineral) to denature.

The solid catalyst for olefin polymerization includes titanium, magnesium, a halogen atom, and an internal electron donor. Such a solid catalyst for olefin polymerization can be produced using a titanium halide compound, a magnesium compound, and an internal electron donor.

Some or all of the titanium atoms included in the solid catalyst for olefin polymerization usually originate from the titanium halide compound. Some or all of the halogen atoms included in the solid catalyst for olefin polymerization usually originate from the titanium halide compound.

The titanium halide compound means a compound which includes halogen atoms and a titanium atom and in which at least one halogen atom is bonded to a titanium atom.

Examples of the titanium halide compound include a titanium tetrahalide such as titanium tetrachloride, titanium tetrabromide, or titanium tetraiodide; a monoalkoxytitanium trihalide such as methoxytitanium trichloride, ethoxytitanium trichloride, n-propoxytitanium trichloride, n-butoxytitanium trichloride, or ethoxytitanium tribromide; a dialkoxytitanium dihalide such as dimethoxytitanium dichloride, diethoxytitanium dichloride, diisopropoxytitanium dichloride, di-n-propoxytitanium dichloride, or diethoxytitanium dibromide; and a trialkoxytitanium monohalide such as trimethoxytitanium chloride, triethoxytitanium chloride, triisopropoxytitanium chloride, tri-n-propoxytitanium chloride, or tri-n-butoxytitanium chloride.

Among these, a titanium tetrahalide or a monoalkoxytitanium trihalide is preferred, a titanium tetrahalide is more preferred, and titanium tetrachloride is even more preferred.

The titanium halide compounds may be used singly, or two or more kinds thereof may be used in combination.

Some or all of the magnesium atoms included in the solid catalyst component for olefin polymerization usually originate from the magnesium compound. Some of the halogen atoms included in the solid catalyst component for olefin polymerization may originate from the magnesium compound.

The magnesium compound may be a compound including a magnesium atom, and examples include compounds represented by the following formulae (i) to (iii).

$$MgR^1_kX_{2-k} \qquad \text{(i)}$$

$$Mg(OR^1)_mX_{2-m} \qquad \text{(ii)}$$

$$MgX_2 \cdot nR^1OH \qquad \text{(iii)}$$

wherein k represents a number satisfying the relation: $0 \leq k \leq 2$;

m represents a number satisfying the relation: $0 < m \leq 2$;

n represents a number satisfying the relation: $0 \leq n \leq 3$;

R$^1$ represents a hydrocarbyl group having 1 to 20 carbon atoms; and
X represents a halogen atom.

Examples of R$^1$ in the above formulae (i) to (iii) include an alkyl group, an aralkyl group, an aryl group, and an alkenyl group, and some or all of the hydrogen atoms included in these groups may be substituted by a halogen atom, a hydrocarbyloxy group, a nitro group, a sulfonyl group, a silyl group, or the like.

Examples of the alkyl group represented by R$^1$ include a linear alkyl group such as a methyl group, an ethyl group, an n-propyl group, an n-butyl group, an n-pentyl group, an n-hexyl group, an n-heptyl group, or an n-octyl group; a branched alkyl group such as an isopropyl group, an isobutyl group, a tert-butyl group, an isopentyl group, a neopentyl group, or a 2-ethylhexyl group; and a cyclic alkyl group such as a cyclopropyl group, a cyclobutyl group, a cyclopentyl group, a cyclohexyl group, a cycloheptyl group, or a cyclooctyl group, and preferred examples include a linear alkyl group having 1 to 20 carbon atoms or a branched alkyl group having 3 to 20 carbon atoms.

Examples of the aralkyl group represented by R$^1$ include a benzyl group and a phenethyl group, and preferred examples include an aralkyl group having 7 to 20 carbon atoms.

Examples of the aryl group represented by R$^1$ include a phenyl group, a naphthyl group, and a tolyl group, and preferred examples include an aryl group having 6 to 20 carbon atoms.

Examples of the alkenyl group represented by R$^1$ include a linear alkenyl group such as a vinyl group, an allyl group, a 3-butenyl group, or a 5-hexenyl group; a branched alkenyl group such as an isobutenyl group or a 4-methyl-3-pentenyl group; and a cyclic alkenyl group such as a 2-cyclohexenyl group or a 3-cyclohexenyl group, and preferred examples include a linear alkenyl group having 2 to 20 carbon atoms and a branched alkenyl group having 3 to 20 carbon atoms.

R$^1$ in the above formulae (i) to (iii) may be only one kind or may be two or more kinds.

Examples of X in the above formulae (i) to (iii) include a chlorine atom, a bromine atom, an iodine atom, and a fluorine atom, and preferred examples include a chlorine atom.

X in the above formulae (i) to (iii) may be only one kind or may be two or more kinds.

Examples of the magnesium compound include a dialkylmagnesium such as dimethylmagnesium, diethylmagnesium, diisopropylmagnesium, dibutylmagnesium, dihexylmagnesium, dioctylmagnesium, ethylbutylmagnesium, dicyclohexylmagnesium, or butyloctylmagnesium; a magnesium dialkoxide such as magnesium dimethoxide, magnesium diethoxide, magnesium dipropoxide, magnesium dibutoxide, magnesium dihexyl oxide, magnesium dioctyl oxide, or magnesium dicyclohexyl oxide; an alkyl magnesium halide such as methylmagnesium chloride, ethylmagnesium chloride, isopropylmagnesium chloride, n-butylmagnesium chloride, t-butylmagnesium chloride, hexylmagnesium chloride, isobutylmagnesium chloride, benzylmagnesium chloride, methylmagnesium bromide, ethylmagnesium bromide, isopropylmagnesium bromide, n-butylmagnesium bromide, t-butylmagnesium bromide, hexylmagnesium bromide, isobutylmagnesium bromide, benzylmagnesium bromide, methylmagnesium iodide, ethylmagnesium iodide, isopropylmagnesium iodide, n-butylmagnesium iodide, t-butylmagnesium iodide, hexylmagnesium iodide, isobutylmagnesium iodide, or benzylmagnesium iodide; an alkoxymagnesium halide such as methoxymagnesium chloride, ethoxymagnesium chloride, isopropoxymagnesium chloride, butoxymagnesium chloride, or hexyloxymagnesium chloride; an aryloxymagnesium halide such as phenyloxymagnesium chloride; and a magnesium halide such as magnesium fluoride, magnesium chloride, magnesium bromide, or magnesium iodide.

Among these, preferred examples include an alkylmagnesium halide, a magnesium halide, or a magnesium dialkoxide.

The alkylmagnesium halide is preferably n-butylmagnesium chloride.

The magnesium halide is preferably magnesium chloride.

The magnesium dialkoxide is preferably a magnesium dialkoxide having an alkyl group having 1 to 20 carbon atoms, more preferably a magnesium dialkoxide having an alkyl group having 1 to 10 carbon atoms, and particularly preferably magnesium dimethoxide, magnesium diethoxide, magnesium dipropoxide, magnesium di(isopropoxide), or magnesium dibutoxide.

Regarding the alkylmagnesium halide, a commercially available product may be used as it is, or a solution obtained by dissolving a commercially available product in a solvent such as an ether compound may be used.

Regarding the magnesium halide, a commercially available product may be used as it is, or a precipitate produced by dropping a solution obtained by dissolving a commercially available product in an alcohol into a hydrocarbon solvent, may be separated and used. Furthermore, magnesium halides produced based on the methods described in US Patent No. 6,825,146, International Publication WO 1998/044009, International Publication WO 2003/000754, International Publication WO 2003/000757, or International Publication WO 2003/085006 may also be used.

A magnesium dialkoxide can be produced by, for example, a method of subjecting metal magnesium and an alcohol to a catalytic reaction in the presence of a catalyst (a method described in Japanese Unexamined Patent Application Publication No. H04-368391, Japanese Unexamined Patent Application Publication No. H03-74341, Japanese Unexamined Patent Application Publication No. 08-73388, International Publication WO 2013/058193, or the like).

Examples of the catalyst include a halogen molecule such as iodine, chlorine, or bromine; and a magnesium halide such as magnesium iodide or magnesium chloride, and preferred examples include iodine.

Examples of the alcohol include methanol, ethanol, propanol, butanol, and octanol.

The magnesium compound may be supported on a carrier material. Examples of the carrier material include a porous inorganic oxide such as $SiO_2$, $Al_2O_3$, $MgO$, $TiO_2$, or $ZrO_2$; and an organic porous polymer such as polystyrene, a styrene-divinylbenzene copolymer, a styrene-ethylene glycol-dimethacrylic acid copolymer, polymethyl acrylate, polyethyl acrylate, a methyl acrylate-divinylbenzene copolymer, polymethyl methacrylate, a methyl methacrylate-divinylbenzene copolymer, polyacrylonitrile, an acrylonitrile-divinylbenzene copolymer, polyvinyl chloride, polyethylene, or polypropylene. Among these, a preferred example is a porous inorganic oxide, and a more preferred example is $SiO_2$.

From the viewpoint of strongly fixing the magnesium compound to the carrier material, the carrier material is preferably a porous material, more preferably a porous material in which the total volume of pores having a pore radius of 10 to 780 nm as determined by a mercury intrusion method according to the Standards ISO 15901-1:2005 is 0.3 $cm^3$/g or more, and even more preferably a porous material in which the total volume of such pores is 0.4 $cm^3$/g or more. Furthermore, a porous material in which the total volume of pores having a pore radius of 10 to 780 nm is 25% or more with respect to the total volume of pores having a pore radius of 2 to 100 $\mu$m is preferred, and a porous carrier material in which the total volume of such pores is 30% or more is more preferred.

The magnesium compounds may be used singly, or two or more kinds thereof may be used in combination.

The internal electron donor included in the solid catalyst for olefin polymerization means an organic compound capable of donating a pair of electrons to a metal atom included in the solid catalyst for olefin polymerization.

Examples of the internal electron donor include a monoester compound, a dicarboxylic acid diester compound, a diol diester compound, a β-alkoxy ester compound, and a diether compound.

The monoester compound means an organic compound having one ester bond (-CO-O-) in the molecule, and an aromatic carboxylic acid ester compound or an aliphatic carboxylic acid ester compound is preferred.

Examples of the aromatic carboxylic acid ester compound include methyl benzoate, ethyl benzoate, propyl benzoate, butyl benzoate, pentyl benzoate, hexyl benzoate, octyl benzoate, methyl toluate, ethyl toluate, propyl toluate, butyl toluate, pentyl toluate, hexyl toluate, and octyl toluate.

Examples of the aliphatic carboxylic acid ester compound include methyl acetate, ethyl acetate, propyl acetate, butyl acetate, pentyl acetate, hexyl acetate, octyl acetate, methyl propionate, ethyl propionate, propyl propionate, butyl propionate, pentyl propionate, hexyl propionate, octyl propionate, methyl butyrate, ethyl butyrate, propyl butyrate, butyl butyrate, pentyl butyrate, hexyl butyrate, octyl butyrate, methyl valerate, ethyl valerate, propyl valerate, butyl valerate, pentyl valerate, hexyl valerate, octyl valerate, methyl caproate, ethyl caproate, propyl caproate, butyl caproate, pentyl caproate, hexyl caproate, octyl caproate, methyl enanthate, ethyl enanthate, propyl enanthate, butyl enanthate, pentyl enanthate, hexyl enanthate, octyl enanthate, methyl caprylate, ethyl caprylate, propyl caprylate, butyl caprylate, pentyl caprylate, hexyl caprylate, octyl caprylate, methyl pelargonate, ethyl pelargonate, propyl pelargonate, butyl pelargonate, pentyl pelargonate, hexyl pelargonate, octyl pelargonate, methyl caprate, ethyl caprate, propyl caprate, butyl caprate, pentyl caprate, hexyl caprate, octyl caprate, methyl laurate, ethyl laurate, propyl laurate, butyl laurate, pentyl laurate, hexyl laurate, octyl laurate, methyl myristate, ethyl myristate, propyl myristate, butyl myristate, pentyl myristate, hexyl myristate, octyl myristate, methyl palmitate, ethyl palmitate, propyl palmitate, butyl palmitate, pentyl palmitate, hexyl palmitate, octyl palmitate, methyl margarate, ethyl margarate, propyl margarate, butyl margarate, pentyl margarate, hexyl margarate, octyl margarate, methyl stearate, ethyl stearate, propyl stearate, butyl stearate, pentyl stearate, hexyl stearate, and octyl stearate.

The dicarboxylic acid diester compound is an organic compound having two ester bonds (-CO-O-) in the molecule and means a compound having a structure in which two carboxyl groups have been esterified with a monohydric alcohol, and an aromatic dicarboxylic acid ester compound or an aliphatic dicarboxylic acid ester compound is preferred.

The aromatic dicarboxylic acid ester compound is, for example, a compound that can be synthesized from an aromatic dicarboxylic acid or an aromatic dicarboxylic acid dihalide and a monohydric alcohol, and specific examples include dimethyl phthalate, diethyl phthalate, dipropyl phthalate, diisopropyl phthalate, diisobutyl phthalate, di-normal-butyl phthalate, di-tertiary-butyl phthalate, dipentyl phthalate, dihexyl phthalate, dioctyl phthalate, dimethyl isophthalate, diethyl isophthalate, dipropyl isophthalate, dibutyl isophthalate, dipentyl isophthalate, dihexyl isophthalate, dioctyl isophthalate, dimethyl terephthalate, diethyl terephthalate, dipropyl terephthalate, dibutyl terephthalate, dipentyl terephthalate, dihexyl terephthalate, and dioctyl terephthalate.

The aliphatic dicarboxylic acid ester compound is, for example, a compound that can be synthesized from an aliphatic dicarboxylic acid or an aliphatic dicarboxylic acid dihalide and a monohydric alcohol, and specific examples include dimethyl ethanedioate, diethyl ethanedioate, dipropyl ethanedioate, dibutyl ethanedioate, dipentyl ethanedioate, dihexyl ethanedioate, dioctyl ethanedioate, dimethyl propanedioate, diethyl propanedioate, dipropyl propanedioate, dibutyl propanedioate, dipentyl propanedioate, dihexyl propanedioate, dioctyl propanedioate, dimethyl butanedioate, diethyl butanedioate, dipropyl butanedioate, dibutyl butanedioate, dipentyl butanedioate, dihexyl butanedioate, dioctyl butanedioate, dimethyl pentanedioate, diethyl pentanedioate, dipropyl pentanedioate, dibutyl pentanedioate, dipentyl pentanedioate, dihexyl pentanedioate, dioctyl pentanedioate, dimethyl hexanedioate, diethyl hexanedioate, dipropyl hexanedioate, dibutyl hexanedioate, dipentyl hexanedioate, dihexyl hexanedioate, dioctyl hexanedioate, dimethyl (E)-but-2-enedioate, diethyl (E)-but-2-enedioate, dipropyl (E)-but-2-enedioate, dibutyl (E)-but-2-enedioate, dipentyl (E)-but-2-enedioate, dihexyl (E)-but-2-enedioate, dioctyl (E)-but-2-enedioate, dimethyl (Z)-but-2-enedioate, diethyl (Z)-but-2-enedioate, dipropyl (Z)-but-2-enedioate, dibutyl (Z)-but-2-enedioate, dipentyl (Z)-but-2-enedioate, dihexyl (Z)-but-2-enedioate, dioctyl (Z)-but-2-enedioate, dimethyl cyclohexane-1,2-dicarboxylate, diethyl cyclohexane-1,2-dicarboxylate, dipropyl cyclohexane-1,2-dicarboxylate, dibutyl cyclohexane-1,2-dicarboxylate, dipentyl cyclohexane-1,2-dicarboxylate, dihexyl cyclohexane-1,2-dicarboxylate, dioctyl cyclohexane-1,2-dicarboxylate, dimethyl 1,2-cyclohexene-1,2-dicarboxylate, diethyl 1,2-cyclohexene-1,2-dicarboxylate, dipropyl 1,2-cyclohexene-1,2-dicarboxylate, dibutyl 1,2-cyclohexene-1,2-dicarboxylate, dipentyl 1,2-cyclohexene-1,2-dicarboxylate, dihexyl 1,2-cyclohexene-1,2-dicarboxylate, dioctyl 1,2-cyclohexene-1,2-dicarboxylate, dimethyl 3-methylcyclohexane-1,2-dicarboxylate, diethyl 3-methylcyclohexane-1,2-dicarboxylate, dipropyl 3-methylcyclohexane-1,2-dicarboxylate, dibutyl 3-methylcyclohexane-1,2-dicarboxylate, dipentyl 3-methylcyclohexane-1,2-dicarboxylate, dihexyl 3-methylcyclohexane-1,2-dicarboxylate, dioctyl 3-methylcyclohexane-1,2-dicarboxylate, dimethyl 3,6-dimethylcyclohexane-1,2-dicarboxylate, diethyl 3,6-dimethylcyclohexane-1,2-dicarboxylate, dipropyl 3,6-dimethylcyclohexane-1,2-dicarboxylate, dibutyl 3,6-dimethylcyclohexane-1,2-dicarboxylate, dipentyl 3,6-dimethylcyclohexane-1,2-dicarboxylate, dihexyl 3,6-dimethylcyclohexane-1,2-dicarboxylate, and dioctyl 3,6-dimethylcyclohexane-1,2-dicarboxylate.

The diol diester compound is a compound having two ester bonds (-CO-O-) in the molecule and means a compound having a structure in which two hydroxyl groups have been used to esterify a carboxyl group of a monocarboxylic acid or a dicarboxylic acid, and specific examples include propane 1,2-dibenzoate, 1,2-diacetyloxypropane, butane 1,2-dibenzoate, 1,2-diacetyloxybutane, cyclohexane 1,2-dibenzoate, 1,2-diacetyloxycyclohexane, propane 1,3-dibenzoate, 1,3-diacetyloxypropane, pentane 2,4-dibenzoate, 2,4-diacetyloxypentane, cyclopentane 1,2-dibenzoate, 1,2-diacetyloxycyclopentane, 4-tert-butyl-6-methylbenzene 1,2-dibenzoate, 1,2-diacetyloxy-4-tert-butyl-6-methylbenzene, 4-tert-butyl-6-methylbenzene 1,3-dibenzoate, and 1,3-diacetyloxy-4-tert-butyl-6-methylbenzene.

The β-alkoxy ester compound means a compound having an alkoxycarbonyl group and having an alkoxy group at the β-position of the alkoxycarbonyl group, and specific examples include methyl 2-methoxymethyl-3,3-dimethylbutanoate, ethyl 2-methoxymethyl-3,3-dimethylbutanoate, propyl 2-methoxymethyl-3,3-dimethylbutanoate, butyl 2-methoxymethyl-3,3-dimethylbutanoate, pentyl 2-methoxymethyl-3,3-dimethylbutanoate, hexyl 2-methoxymethyl-3,3-dimethylbutanoate, octyl 2-methoxymethyl-3,3-dimethylbutanoate, methyl 3-methoxy-2-phenylpropionate, ethyl 3-methoxy-2-phenylpropionate, propyl 3-methoxy-2-phenylpropionate, butyl 3-methoxy-2-phenylpropionate, pentyl 3-methoxy-2-phenylpropionate, hexyl 3-methoxy-2-phenylpropionate, octyl 3-methoxy-2-phenylpropionate, methyl 2-ethoxymethyl-3,3-dimethylbutanoate, ethyl 2-ethoxymethyl-3,3-dimethylbutanoate, propyl 2-ethoxymethyl-3,3-dimethylbutanoate, butyl 2-ethoxymethyl-3,3-dimethylbutanoate, pentyl 2-ethoxymethyl-3,3-dimethylbutanoate, hexyl 2-ethoxymethyl-3,3-dimethylbutanoate, octyl 2-ethoxymethyl-3,3-dimethylbutanoate, methyl 3-ethoxy-2-phenylpropionate, ethyl 3-ethoxy-2-phenylpropionate, propyl 3-ethoxy-2-phenylpropionate, butyl 3-ethoxy-2-phenylpropionate, pentyl 3-ethoxy-2-phenylpropionate, hexyl 3-ethoxy-2-phenylpropionate, octyl 3-ethoxy-2-phenylpropionate, methyl 2-propyloxymethyl-3,3-dimethylbutanoate, ethyl 2-propyloxymethyl-3,3-dimethylbutanoate, propyl 2-propyloxymethyl-3,3-dimethylbutanoate, butyl 2-propyloxymethyl-3,3-dimethylbutanoate, pentyl 2-propyloxymethyl-3,3-dimethylbutanoate, hexyl 2-propyloxymethyl-3,3-dimethylbutanoate, octyl 2-propyloxymethyl-3,3-dimethylbutanoate, methyl 3-propyloxy-2-phenylpropionate, ethyl 3-propyloxy-2-phenylpropionate, propyl 3-propyloxy-2-phenylpropionate, butyl 3-propyloxy-2-phenylpropionate, pentyl 3-propyloxy-2-phenylpropionate, hexyl 3-propyloxy-2-phenylpropionate, octyl 3-propyloxy-2-phenylpropionate, methyl 2-methoxybenzenecarboxylate, ethyl 2-methoxybenzenecarboxylate, propyl 2-methoxybenzenecarboxylate, butyl 2-methoxybenzenecarboxylate, pentyl 2-methoxybenzenecarboxylate, hexyl 2-methoxybenzenecarboxylate, octyl 2-methoxybenzenecarboxylate, methyl 2-ethoxybenzenecarboxylate, ethyl 2-ethoxybenzenecarboxylate, propyl 2-ethoxybenzenecarboxylate, butyl 2-ethoxybenzenecarboxylate, pentyl 2-ethoxybenzenecarboxylate, hexyl 2-ethoxybenzenecarboxylate, and octyl 2-ethoxybenzenecarboxylate.

The diether compound means a compound having two ether bonds in the molecule, and specific examples include 1,2-dimethoxypropane, 1,2-diethoxypropane, 1,2-dipropyloxypropane, 1,2-dibutoxypropane, 1,2-di-tert-butoxypropane, 1,2-diphenoxypropane, 1,2-dibenzyloxypropane, 1,2-dimethoxybutane, 1,2-diethoxybutane, 1,2-dipropyloxybutane, 1,2-dibutoxybutane, 1,2-di-tert-butoxybutane, 1,2-diphenoxybutane, 1,2-dibenzyloxybutane, 1,2-dimethoxycyclohexane, 1,2-diethoxycyclohexane, 1,2-dipropyloxycyclohexane, 1,2-dibutoxycyclohexane, 1,2-di-tert-butoxycyclohexane, 1,2-diphenoxycyclohexane, 1,2-dibenzyloxycyclohexane, 1,3-dimethoxypropane, 1,3-diethoxypropane, 1,3-dipropyloxypropane, 1,3-dibutoxypropane, 1,3-di-tert-butoxypropane, 1,3-diphenoxypropane, 1,3-dibenzyloxypropane, 2,4-dimethoxypentane, 2,4-diethoxypentane, 2,4-dipropyloxypentane, 2,4-dibutoxypentane, 2,4-di-tert-butoxypentane, 2,4-diphenoxypentane, 2,4-dibenzyloxypentane, 1,2-dimethoxycyclopentane, 1,2-diethoxycyclopentane, 1,2-dipropyloxycyclopentane, 1,2-dibutoxycyclopentane, 1,2-di-tert-butoxycyclopentane, 1,2-diphenoxycyclopentane, 1,2-dibenzyloxycyclopentane, 9,9-bis(methoxymethyl)fluorene, 9,9-bis(ethoxymethyl)fluorene, 9,9-bis(propyloxymethyl)fluorene, 9,9-bis(butoxymethyl)fluorene, 9,9-bis-tert-butoxymethylfluorene, 9,9-bis(phenoxymethyl)fluorene, 9,9-bis(benzyloxymethyl)fluorene, 1,2-dimethoxybenzene, 1,2-diethoxybenzene, 1,2-dipropyloxybenzene, 1,2-dibutoxybenzene, 1,2-di-tert-butoxybenzene, 1,2-diphenoxybenzene, and 1,2-dibenzyloxybenzene.

Among these, a preferred compound is a dicarboxylic acid diester compound, a diol diester compound, or a β-alkoxy ester compound.

The internal electron donor may be used singly, or two or more kinds thereof may be used in combination.

The solid catalyst for olefin polymerization used in the production method of the present embodiment is such that the weight average particle size is preferably 5 to 100 μm, more preferably 8 to 50 μm, and even more preferably 10 to 40 μm.

Organoaluminum compound

An organoaluminum compound has at least one Al-carbon bond in the molecule. A representative organoaluminum compound is a compound represented by the following formula.

$$R^{11}_nAlY_{3-n}R^{12}R^{13}Al\text{-}O\text{-}AlR^{14}R^{15}$$

wherein n represents a number satisfying the relation: $2 \leq n \leq 3$;

$R^{11}$ to $R^{15}$ each represent a hydrocarbon group having 1 to 20 carbon atoms; and

Y represents a hydrogen atom, a halogen atom, or an alkoxy group.

Specific examples of the organoaluminum compound include a trialkylaluminum such as triethylaluminum, triisobutylaluminum, or trihexylaluminum; a dialkylaluminum hydride such as diethylaluminum hydride or diisobutylaluminum hydride; a dialkylaluminum halide such as diethylaluminum chloride; a mixture of a trialkylaluminum and a dialkylaluminum halide, represented by a mixture of triethylaluminum and diethylaluminum chloride; and an alkylalumoxane such as tetraethyldialumoxane and tetrabutyldialumoxane.

Among these organoaluminum compounds, a trialkylaluminum, a mixture of a trialkylaluminum and a dialkylaluminum halide, or an alkylalumoxane is preferred, and triethylaluminum, triisobutylaluminum, a mixture of triethylaluminum and diethylaluminum chloride, or tetraethylalumoxane is more preferred.

The amount of use of the organoaluminum compound is usually 0.5 to 1000 mol, and preferably 1 to 600 mol, with respect to 1 mol of titanium atoms included in the solid catalyst for olefin polymerization.

Electron donating compound

Examples of the electron donating compound include the compounds described in Japanese Patent No. 2950168, Japanese Unexamined Patent Application Publication No. 2006-96936, Japanese Unexamined Patent Application Publication No. 2009-173870, and Japanese Unexamined Patent Application Publication No. 2010-168545. Among these, a preferred example is an oxygen atom-containing compound or a nitrogen atom-containing compound.

Examples of the oxygen atom-containing compound include an alkoxysilicon compound, an ether compound, an ester compound, and a ketone compound. Among these, a preferred example is an alkoxysilicon compound or an ether compound. Examples of the alkoxysilicon compound include cyclohexylmethyldimethoxysilane, cyclohexylethyldimethoxysilane, diisopropyldimethoxysilane, tert-butylethyldimethoxysilane, tert-butyl-n-propyldimethoxysilane, phenyltrimethoxysilane, diphenyldimethoxysilane, dicyclobutyldimethoxysilane, dicyclopentyldimethoxysilane, tetraethoxysilane, methyltriethoxysilane, ethyltriethoxysilane, isobutyltriethoxysilane, vinyltriethoxysilane, sec-butyltriethoxysilane, cyclohexyltriethoxysilane, and cyclopentyltriethoxysilane.

The electron donating compounds may be used singly, or two or more kinds thereof may be used in combination. Examples of the combination of two or more kinds include a combination of a dialkoxysilane and tetraethoxysilane, and specific examples include a combination of tert-butyl-n-propyldimethoxysilane and tetraethoxysilane.

[Polymerization of propylene]

Regarding polymerization of propylene, only propylene may be homopolymerized, or propylene and a component other than propylene, such as a linear monoolefin such as ethylene, butene-1, pentene-1, hexene-1, heptene-1, octene-1, or decene-1; a branched monoolefin such as 3-methylbutene-1, 3-methylpentene-1, or 4-methylpentene-1; or vinyl cyclohexane, may be copolymerized. The component other than propylene may be only one kind or may be two or more kinds. Among these, it is preferable to homopolymerize propylene only, or to copolymerize propylene and a component other than propylene such that propylene is included as a main component. Furthermore, propylene and a compound having multiple unsaturated bonds, such as a conjugated diene or a non-conjugated diene, may be copolymerized. Furthermore, the polymerization of propylene may also be carried out by block copolymerization by multistage polymerization of two or more stages.

For the polymerization of propylene, as described above, a solid catalyst for olefin polymerization and a catalyst obtained by bringing an organoaluminum compound into contact with an electron donating compound (hereinafter, also referred to as "polymerization catalyst") are used.

Regarding the method of supplying the solid catalyst for olefin polymerization, the organoaluminum compound, and the electron donating compound to a polymerization tank, there are no particularly limiting conditions except that the materials are supplied in an inert gas atmosphere such as nitrogen gas or argon gas, which does not contain any water, and the materials may be supplied with a diluent such as butane or hexane.

The solid catalyst for olefin polymerization, the organoaluminum compound, and the electron donating compound may be individually supplied, or any two among the solid catalyst for olefin polymerization, the organoaluminum compound, and the electron donating compound may be brought into contact in advance and then supplied.

In the production method of the present embodiment, propylene is polymerized in the presence of the polymerization catalyst; however, preliminary polymerization may be carried out before carrying out such polymerization (hereinafter, also referred to as "main polymerization").

Preliminary polymerization is carried out by supplying a small amount of propylene in the presence of the solid catalyst for olefin polymerization and the organoaluminum compound. It is preferable that the preliminary polymerization is carried out in a slurry state. Examples of the solvent used for slurrifying include inert hydrocarbon solvents such as propane, butane, isobutane, pentane, isopentane, hexane, heptane, octane, cyclohexane, benzene, and toluene. Furthermore, at the time of slurrifying, liquid propylene may be used instead of a portion or the entirety of the inert hydrocarbon solvent.

The amount of use of the organoaluminum compound at the time of performing preliminary polymerization is usually 0.5 to 700 mol, preferably 0.8 to 500 mol, and more preferably 1 to 200 mol, with respect to 1 mol of titanium atoms included in the solid catalyst for olefin polymerization.

The amount of propylene at the time of performing preliminary polymerization is usually 0.01 to 1000 g, preferably 0.05 to 500 g, and more preferably 0.1 to 200 g, per 1 g of the solid catalyst for olefin polymerization.

The slurry concentration at the time of performing preliminary polymerization is preferably 1 to 500 g-solid catalyst for olefin polymerization/liter-solvent, and more preferably 3 to 300 g-solid catalyst component for olefin polymerization/liter-solvent. The temperature for performing preliminary polymerization is preferably -20°C to 100°C, and more preferably 0°C to 80°C. The partial pressure of olefins in the gas phase part during the preliminary polymerization is preferably 0.01 to 20 kg/cm$^2$, and more preferably 0.1 to 10 kg/cm$^2$; however, this does not apply to olefins that are liquid at the pressure and temperature at the time of performing preliminary polymerization. The time for performing preliminary polymerization is usually 2 minutes to 15 hours.

Regarding the method of supplying the solid catalyst for olefin polymerization, the organoaluminum compound, and propylene at the time of performing preliminary polymerization, either a method of bringing the solid catalyst for olefin polymerization into contact with the organoaluminum compound and then supplying propylene, or a method of bringing the solid catalyst for olefin polymerization into contact with propylene and then supplying the organoaluminum compound may be used. Regarding the method of supplying propylene, either a method of supplying propylene sequentially while maintaining the inside of the polymerization tank at a predetermined pressure, or a method of supplying all of a predetermined amount of propylene in the beginning may be used. In order to regulate the molecular weight of the propylene polymer to be obtained, a chain transfer agent such as hydrogen may be added.

Furthermore, at the time of performing preliminary polymerization of a small amount of propylene in the presence of the solid catalyst for olefin polymerization and the organoaluminum compound, an electron donating compound may be allowed to co-exist. Regarding the electron donating compound to be used, for example, the above-mentioned electron donating compounds may be mentioned. The amount of use of the electron donating compound is usually 0.01 to 400 mol, preferably 0.02 to 200 mol, and more preferably 0.03 to 100 mol, with respect to 1 mol of the titanium atoms included in the solid catalyst component for olefin polymerization, and is usually 0.003 to 5 mol, preferably 0.005 to 3 mol, and more preferably 0.01 to 2 mol, with respect to 1 mol of the organoaluminum compound.

The method of supplying the electron donating compound at the time of performing preliminary polymerization is not particularly limited, and the electron donating compound and the organoaluminum compound may be supplied separately, or the electron donating compound and the organoaluminum compound may be brought into contact in advance and then supplied. The preliminary polymerization may be polymerization of propylene or polymerization of another olefin.

After performing preliminary polymerization, or without performing preliminary polymerization, main polymerization of propylene can be carried out in the presence of the solid catalyst for olefin polymerization and the polymerization catalyst obtained by bringing an organoaluminum compound into contact with an electron donating compound.

The amount of use of the organoaluminum compound at the time of performing main polymerization is usually 1 to 1000 mol, and preferably 5 to 600 mol, with respect to 1 mol of the titanium atoms included in the solid catalyst for olefin polymerization.

The amount of use of the electron donating compound at the time of performing main polymerization is usually 0.1 to 2000 mol, preferably 0.3 to 1000 mol, and more preferably 0.5 to 800 mol, with respect to 1 mol of the titanium atoms included in the solid catalyst for olefin polymerization, and is usually 0.001 to 5 mol, preferably 0.005 to 3 mol, and more preferably 0.01 to 1 mol, with respect to 1 mol of the organoaluminum compound.

The main polymerization of propylene is usually performed at a temperature of -30 to 300°C; however, it is preferable that the main polymerization is performed at a temperature of 20 to 180°C. The pressure at the time of the main polymerization of propylene is not particularly limited; however, the pressure is usually normal pressure to 100 kg/cm$^2$, and preferably 2 to 50 kg/cm$^2$. Regarding the mode of polymerization, either batch type or continuous type can be employed. Furthermore, slurry polymerization or solution polymerization by means of an inert hydrocarbon solvent such as propane, butane, isobutane, pentane, hexane, heptane, or octane can also be employed, and bulk polymerization or gas phase polymerization using propylene that is liquid at the polymerization temperature as a medium can also be employed.

At the time of the main polymerization of propylene, a chain transfer agent such as hydrogen may be added in order to regulate the molecular weight of the propylene polymer.

[Step (2)]

Step (2) is a step of washing the propylene polymer obtained in step (1) with a deashing agent to remove a catalyst residue in the propylene polymer and is a step satisfying the following formula (1):

$$4.4 \times \log(T) - \log(EW) > 0.34 \times (\delta(W) - \delta(E)) \qquad (1)$$

wherein T represents the temperature (°C) at the time of washing the propylene polymer with the deashing agent;

EW represents the water content (wt%) in the deashing agent;
$\delta(W)$ represents the Hansen solubility parameter of water; and
$\delta(E)$ represents the Hansen solubility parameter of the deashing agent.

As the step of washing the propylene polymer with a deashing agent to remove a catalyst residue in the propylene polymer, for example, a step of causing the deashing agent to penetrate into the inner part of the particles of the propylene polymer, solubilizing the catalyst residue into the deashing agent, and removing the solubilized catalyst residue may be mentioned.

The temperature (°C) at the time of washing the propylene polymer with the deashing agent is preferably a high temperature in a temperature range in which propylene maintains a liquid state and in a temperature range in which the propylene polymer maintains a solid particulate state. The temperature (°C) at the time of washing the propylene polymer with the deashing agent is usually 20°C to 100°C, preferably 40°C to 90°C, and more preferably 50°C to 80°C.

The time for washing the propylene polymer with the deashing agent is preferably 3 minutes to 5 hours, more preferably 10 minutes to 3 hours, and even more preferably 30 minutes to 2 hours, from the viewpoint of efficiency.

The number of times of washing the propylene polymer with the deashing agent is preferably 1 to 5 times, more preferably 1 to 3 times, and even more preferably 1 or 2 time, from the viewpoint of efficiency. In the case of washing the propylene polymer with the deashing agent several times, the washing temperature and the washing time may be the same or different. In a case where the propylene polymer is washed with the deashing agent several times and in a case where the washing conditions vary, regarding the temperature (°C) at the time of washing the propylene polymer with the deashing agent, an average temperature based on the ratio of the washing times is used. For example, in a case where a first washing is performed for 30 minutes at 55°C and a second washing is performed for 30 minutes at 45°C, the temperature (°C) at the time of washing the propylene polymer with the deashing agent is 50°C. Furthermore, in a case where the first washing is performed for 60 minutes at 60°C and the second washing is performed for 30 minutes at 30°C, the temperature (°C) at the time of washing the propylene polymer with the deashing agent, the washing temperature, is 50°C.

The deashing agent is usually a solvent having a heteroatom such as an oxygen atom or a nitrogen atom. The deashing agent is preferably a deashing agent that efficiently penetrates into the inner part of the particles of the propylene polymer, and preferably a deashing agent having high affinity with the propylene polymer. That is, the deashing agent is preferably a deashing agent having a Hansen solubility parameter close to the Hansen solubility parameter of the propylene polymer.

From the viewpoint of solubilizing the catalyst residue, it is preferable that the deashing agent has high polarity. That is, the deashing agent is preferably a deashing agent having a high Hansen solubility parameter.

The Hansen solubility parameter $\delta$ is a solubility parameter introduced by Hildebrand, divided into three components including a dispersion term $\delta D$, a polarity term $\delta P$, and a hydrogen bonding term $\delta H$ and expressed in a three-dimensional space. The dispersion term $\delta D$ represents an effect by the dispersion force, the polarity term $\delta P$ represents an effect by the dipolar intermolecular force, and the hydrogen bonding term $\delta H$ represents an effect by the hydrogen bonding force.

The definition and calculation of the Hansen solubility parameter are described in Charles M. Hansen, Hansen Solubility Parameters: A Users Handbook (CRC Press, 2007). Furthermore, by using the computer software Hansen Solubility Parameters in Practice (HSPiP), even for a solvent whose literature value for the Hansen solubility parameter is not known, the Hansen solubility parameter can be estimated from the chemical structure.

In the present specification, the HSPiP (for example, HSPiP version 5) was used, and for a solvent registered in a database, the value was used, and for a solvent that is not registered in a database, an estimated value was used.

The Hansen solubility parameter of water ($\delta(W)$) is 47.8.

The Hansen solubility parameter of the deashing agent ($\delta(E)$) used for the production method of the present embodiment is preferably 18 to 30, more preferably 18 to 28, even more preferably 19 to 27, and particularly preferably 20 to 27.

Examples of the deashing agent used for the production method of the present embodiment include an alcohol such as ethanol or isopropyl alcohol; an ether such as 1,4-dioxane or tetrahydrofuran; and an amine such as triethylamine or pyridine. Among these, a preferred example is an alcohol, and a more preferred example is an alcohol having 1 to 6 carbon atoms.

Specific examples of the deashing agent include methanol ($\delta$: 29.4), ethanol ($\delta$: 26.5), isopropyl alcohol ($\delta$: 23.6), 1-butanol ($\delta$: 23.2), 2-methylpropyl alcohol ($\delta$: 22.7), 2-butanol ($\delta$: 22.2), tert-butanol ($\delta$: 21.8), 2-butoxyethanol ($\delta$: 20.8), 1,4-dioxane ($\delta$: 19.8), tetrahydrofuran ($\delta$: 19.5), and propylene oxide ($\delta$: 18.8).

Among these, ethanol ($\delta$: 26.5), isopropyl alcohol ($\delta$: 23.6), 1-butanol ($\delta$: 23.2), 2-methylpropyl alcohol ($\delta$: 22.7), 2-butanol ($\delta$: 22.2), tert-butanol ($\delta$: 21.8), 2-butoxyethanol ($\delta$: 20.8), 1,4-dioxane ($\delta$: 19.8), tetrahydrofuran ($\delta$: 19.5), or propylene oxide ($\delta$: 18.8) is preferred; ethanol ($\delta$: 26.5), isopropyl alcohol ($\delta$: 23.6), 1-butanol ($\delta$: 23.2), 2-methylpropyl alcohol ($\delta$: 22.7), 2-butanol ($\delta$: 22.2), tert-butanol ($\delta$: 21.8), 2-butoxyethanol ($\delta$: 20.8), 1,4-dioxane ($\delta$: 19.8), or tetra-hydrofuran ($\delta$: 19.5) is more preferred; and ethanol ($\delta$: 26.5), isopropyl alcohol ($\delta$: 23.6), 1-butanol ($\delta$: 23.2), 2-methylpropyl alcohol ($\delta$: 22.7), 2-butanol ($\delta$: 22.2), tert-butanol ($\delta$: 21.8), or 2-butoxyethanol ($\delta$: 20.8) is even more preferred.

The deashing agent used for the production method of the present embodiment may be only one kind or may be two or more kinds. When a plurality of deashing agents are used, regarding the Hansen solubility parameter of the deashing agent ($\delta(E)$), an average Hansen solubility parameter based on the volume ratio is used.

The amount of water in the deashing agent (wt%) (EW) is measured by a Karl Fischer method.

When the amount of water in the deashing agent (wt%) (EW) is large, the catalyst residue reacts with water in the deashing agent and changes into a component insoluble in the deashing agent, and removal becomes difficult. Therefore, it is preferable that the amount of water in the deashing agent is small. The amount of water in the deashing agent is 0.01% by weight or more and 0.1% by weight or less, more preferably 0.01% by weight or more and 0.05% by weight or less, even more preferably 0.01% by weight or more and 0.03% by weight or less.

Since an industrially available deashing agent such as an alcohol or an ether contains water, it is preferable to perform a dehydration treatment. Examples of the dehydration treatment include dehydration by azeotropic distillation using a solvent that forms a minimum azeotrope with water, such as benzene, toluene, or hexane; and dehydration using a desiccant such as zeolite.

From the viewpoint of further reducing the catalyst residue, the amount of the deashing agent used for the production method of the present embodiment is preferably a molar ratio of 3 to 10,000, more preferably a molar ratio of 5 to 1,000, and even more preferably a molar ratio of 10 to 500, with respect to the organoaluminum compound included in the polymerization catalyst.

The deashing agent used for the production method of the present embodiment may be used after being diluted in a solvent. The diluting solvent may be a hydrocarbon, and specific examples include propylene, propane, 1-butene, butane, 1-hexene, hexane, 1-heptene, heptane, 1-octene, and octane. Among these, preferred examples include propylene, hexane, or heptane, and more preferred examples include propylene or heptane.

A method of washing the propylene polymer obtained in step (1) by bringing the propylene polymer into countercurrent contact with a solvent including a deashing agent to remove a catalyst residue in the propylene polymer is preferred. That is, a catalyst residue is removed by a method of continuously bringing the propylene polymer powder in a propylene slurry state into contact with a solvent including a deashing agent to wash the propylene polymer, and thereby the catalyst is deactivated, and at the same time, low molecular weight components, low stereoregularity components, and the catalyst residue dissolved in the propylene polymer are separated from the polymer powder. The contact between the propylene polymer and the solvent including the deashing agent may be a batch type countercurrent contact or may be continuous type countercurrent contact; however, continuous type countercurrent contact is preferred.

Since the propylene polymer produced by the production method of the present embodiment is such that the catalyst residue in the propylene polymer has been sufficiently reduced, the propylene polymer can be suitably used for electronic component applications such as a separator film and a capacitor film.

**Examples**

Hereinafter, the present invention will be more specifically described by way of Examples; however, the present invention is not intended to be limited to the following Examples.

The measured values for various items in Examples and Comparative Examples were measured by the following methods.

(1) Magnesium (Mg) content in propylene polymer

The Mg content was measured by an ICP-AES measurement method using a VISTA-PRO measuring machine manufactured by VARIAN, Inc.

(2) Chlorine (Cl) content in propylene polymer

The propylene polymer was thermally decomposed using an **AQF-100** sample combustion apparatus manufactured by Dia Instruments Co., Ltd., and the Cl content in an absorption liquid that had captured a pyrolysis gas thus obtained was measured using an ion chromatograph ICS-200 manufactured by Dionex Corp.

(3) Removal efficiency (%) for catalyst residue in propylene polymer

Values obtained by dividing the Mg content and the Cl content obtained in the above-described sections (1) and (2) respectively by the values obtained by the following calculation formulae were designated as removal efficiencies for the respective elements.

Catalyst residue (wtppm) included in polypropylene at polymerization activity arrangement

Mg: Mg content included in solid catalyst component/100/polymerization activity $\times$ 10^6
Cl: Cl content included in solid catalyst component/100/polymerization activity $\times$ 10^6

(4) Preparation of deashing agent and measurement of amount of water in deashing agent

A molecular sieve activated according to the method described in "Journal of the Ceramic Society of Japan, 96 [2], 140-45 (1988)" was added to a commercially available alcohol to dehydrate the alcohol for 24 hours, and a deashing agent was prepared. A predetermined amount of pure water was added to the prepared deashing agent, and thereby deashing agents having different amounts of water were prepared. The amount of water in the deashing agent was measured using a Karl Fischer moisture titrator (MKC-61 manufactured by Kyoto Electronics Manufacturing Co., Ltd.).

(Example 1)

(1) Synthesis of solid product (A)

The interior of a reduction tank (internal volume 187 L, jacketed stirring tank) equipped with a dropping facility was purged with nitrogen gas, subsequently 80 L of hexane, 2.43 Kg (7.14 mol) of tetrabutoxytitanium, and 20.6 Kg (98.9 mol) of tetraethoxysilane were introduced into the reduction tank and stirred, and thus a uniform solution was prepared. The internal temperature of the reduction tank was maintained at 17°C, and while the interior of the reduction tank was stirred, 42.3 Kg of a di-n-butyl ether solution of n-butylmagnesium chloride (manufactured by YUKI GOSEI KOGYO CO., LTD., n-butylmagnesium chloride concentration 2.1 mmol/ml) was added dropwise for 5 hours from the dropping facility. After completion of dropping, the internal temperature of the reduction tank was maintained at 17°C, the interior of the reduction tank was stirred for 1 hour, subsequently the temperature was raised to 20°C, the interior of the reduction tank was further stirred for 1 hour, and thereby a slurry was prepared.

The interior of a filtration washing tank (internal volume 420 L) equipped with a sintered metal filter was purged with nitrogen gas, the slurry in the reduction tank was transferred to the filtration washing tank by means of nitrogen pressure (hereinafter, referred to as pressure-feeding), and the slurry was subjected to solid-liquid separation by a filtering operation. A solid thus obtained was further subjected to filtration and washing with 70 L of toluene repeatedly for three times, and thus a slurry was prepared.

The slurry in the filtration washing tank was pressure-fed to an activation tank (jacketed stirring tank different from the above-described reduction tank), and toluene was added thereto to adjust the slurry concentration to 0.40 g-solid/ml-solvent (hereinafter, the slurry concentration will be simply expressed in g/ml). While the temperature of the slurry in the activation tank was controlled to be 10°C with the cooling medium in the jacket, stirring was performed intermittently for 10 minutes every 8 hours, this state was maintained for 30 hours, and thus a solid product (A) was obtained. The solid product (A) thus obtained was 15 kg.

(2) Synthesis of solid catalyst component for olefin polymerization

A solid catalyst for olefin polymerization was synthesized by activating the solid product (A) obtained as described above in the following manner.

[1] The internal temperature of the activation tank was maintained at 75°C or lower, while the solid product (A) in the activation tank was stirred, a mixed liquid of 1.16 Kg of dibutyl ether and 51.8 Kg of titanium tetrachloride was added thereto, and then 4.23 Kg of phthalic acid chloride was added thereto. Subsequently, the internal temperature of the activation tank was raised to 110°C, and a reaction was carried out for 3 hours at 110°C. During this reaction, the gas in the activation tank was controlled so as not to escape from the tank. The pressure inside the activation tank gradually increased to about 300 KPaG along with the progress of the reaction. A slurry of the organic acid halide-treated solid obtained by this reaction was pressure-fed to the filtration washing tank and then was subjected to solid-liquid separation by a filtering operation. The solid thus obtained was further filtered and washed repeatedly for three times with 70 L of toluene. Subsequently, the slurry was pressure-fed from the filtration washing tank to the activation tank, and toluene was added thereto to adjust the slurry concentration to 0.40 g/ml.
[2] While the slurry in the activation tank was stirred, a mixed liquid of 1.16 Kg of dibutyl ether, 0.87 Kg of diisobutyl phthalate, and 20.7 Kg of titanium tetrachloride was added thereto, subsequently the internal temperature of the activation tank was raised to 110°C, and a reaction was carried out for 1 hour at 110°C in the same manner as described above in [1]. Subsequently, the filtration and washing operations were repeated two times in the same manner as described above in [1], subsequently the slurry was pressure-fed from the filtration washing tank to the activation tank, and toluene was added thereto to adjust the slurry concentration to 0.40 g/ml.
[3] While the slurry in the activation tank was stirred, a mixed liquid of 1.16 Kg of dibutyl ether and 20.7 Kg of titanium tetrachloride was added thereto, subsequently the internal temperature of the activation tank was raised to 110°C, and a reaction was carried out for 1 hour at 110°C in the same manner as described above in [1]. Subsequently, filtration and washing operations were repeated two times in the same manner as described above in [1], subsequently the slurry was pressure-fed from the filtration washing tank to the activation tank, and toluene was added thereto to adjust the slurry concentration to 0.40 g/ml.
[4] While the slurry in the activation tank was stirred, a mixed liquid of 1.16 Kg of dibutyl ether and 20.7 Kg of titanium tetrachloride was added thereto, subsequently the internal temperature of the activation tank was raised to 110°C, and a reaction was carried out for 1 hour at 110°C in the same manner as described above in [1]. Subsequently, filtration and washing operations were repeated three times in the same manner as described above in [1], and then filtration and washing were repeated three times with 70 L of hexane.
[5] A slurry of the solid catalyst for olefin polymerization obtained by the above-described activation treatment was pressure-fed to a powder dryer in which its internal temperature is adjusted to 70°C and a nitrogen gas having a dew point of -68°C was circulated. Subsequently, the organic solvent portion was evaporated and dried, and 13.5 Kg of the solid catalyst for olefin polymerization was obtained. The solid catalyst for olefin polymerization thus obtained contained 1.6% by weight of titanium atoms, 21% by weight of magnesium atoms, and 62% by weight of chlorine atoms.

(4) Polymerization of propylene

The interior of a stainless-steel autoclave with a stirrer and having an internal volume of 3 liters was dried under reduced pressure, purged with argon gas, and decompressed, and then 0.66 mmol of triethylaluminum, 6.6 $\mu$mol of tert-butyl-n-propyldimethoxysilane, 0.026 mmol of tetraethoxysilane, and 7.94 mg of the solid catalyst for olefin polymerization prepared as described above were added thereto. Subsequently, 0.10 MPa of hydrogen gas and 780 g of liquid propylene were introduced thereto, the internal temperature of the autoclave was raised to 80°C, and polymerization was performed for 2 hours. Subsequently, while the internal temperature of the autoclave was maintained at 80°C, a deashing agent (isopropyl alcohol having an amount of water of 0.002% by weight, 98 mmol) was added thereto, and the propylene polymer was washed for 30 minutes (first time washing). Subsequently, liquid propylene that was not used for polymerization was transferred, through a metal filter, to an autoclave for propylene collection that had been cooled under reduced pressure. The autoclave used for polymerization was cooled under reduced pressure, subsequently 500 g of liquid propylene including the deashing agent (isopropyl alcohol having an amount of water of 0.002% by weight, 98 mmol) was added thereto, the internal temperature of the autoclave was raised to 80°C, and the propylene polymer was washed for 30 minutes (second time washing). Subsequently, liquid propylene was transferred to the above-described autoclave for propylene collection through a metal filter. The autoclave used for polymerization was opened, the propylene polymer was collected and dried under reduced pressure for 2 hours at 70°C, and 410 g of a propylene polymer powder was obtained. Therefore, the yield of polypropylene per 1 g of the solid catalyst for olefin polymerization (hereinafter, PP/Cat) was PP/Cat = 51, 612 (g/g). The amount of Mg included in the propylene polymer powder was 0.7 wtppm, and the amount of Cl was 2.8 wtppm. The results are presented in Table 1 and Table 2.

Examples 2 to 12

Polymerization of propylene and washing of a propylene polymer were carried out in the same manner as in Example 1, except that the amount of use of the solid catalyst for olefin polymerization, the polymerization time, the deashing agent, the amount of use of the deashing agent, and the deashing temperature were set to the conditions described in Table 1. The results are presented in Table 1 and Table 2.

Comparative Examples 1 to 5

Polymerization of propylene and washing of a propylene polymer were carried out in the same manner as in Example 1, except that the amount of use of the solid catalyst for olefin polymerization, the polymerization time, the deashing agent, the amount of use of the deashing agent, and the deashing temperature were set to the conditions described in Table 1. The results are presented in Table 1 and Table 2.

[Table 1]

| | Polymerization time | Activity | Obtained amount | Type of deashing agent | Amount of water in deashing agent | Deashing agent /organoaluminum compound | Deashing temperature |
|---|---|---|---|---|---|---|---|
| | hr | g/g | g | | wt% | mol/mol | °C |
| Comparative Example 1 | 2 | 51,612 | 410 | IPA | 0.002 | 300 | 80 |
| Comparative Example 2 | 2 | 48,448 | 422 | IPA | 0.002 | 300 | 65 |
| Comparative Example 3 | 2 | 48,342 | 468 | IPA | 0.002 | 300 | 50 |
| Example 1 | 0.5 | 16,653 | 181 | IPA | 0.014 | 300 | 50 |
| Comparative Example 4 | 0.5 | 20,587 | 266 | IPA | 0.150 | 300 | 80 |
| Comparative Example 5 | 0.5 | 18,197 | 264 | IPA | 0.150 | 300 | 65 |
| Comparative Example 6 | 0.5 | 16,814 | 244 | IPA | 0.005 | 300 | 35 |
| Example 2 | 0.5 | 13,934 | 182 | BuOEtOH | 0.014 | 174 | 55 |
| Example 3 | 0.5 | 13,721 | 168 | BuOEtOH | 0.014 | 300 | 55 |
| Comparative Example 7 | 0.5 | 13,108 | 191 | BuOEtOH | 0.004 | 300 | 50 |
| Comparative Example 8 | 0.5 | 21,653 | 293 | BuOEtOH | 0.004 | 300 | 80 |
| Example 4 | 0.5 | 21,396 | 296 | BuOEtOH | 0.014 | 300 | 80 |
| Comparative Example 9 | 0.5 | 18,201 | 212 | IPA | 0.150 | 300 | 20 |

(continued)

| | Polymerization time | Activity | Obtained amount | Type of deashing agent | Amount of water in deashing agent | Deashing agent /organoaluminum compound | Deashing temperature |
|---|---|---|---|---|---|---|---|
| | hr | g/g | g | | wt% | mol/mol | °C |
| Comparative Example 10 | 0.5 | 18,736 | 247 | IPA | 0.150 | 300 | 35 |
| Comparative Example 11 | 2 | 51,506 | 448 | IPA | 0.150 | 300 | 50 |
| Comparative Example 12 | 0.5 | 14,714 | 171 | IPA | 0.050 | 300 | 40 |
| Comparative Example 13 | 0.5 | 14,525 | 225 | BuOEtOH | 0.159 | 300 | 50 |

[Table 2]

| | Formula (1) | | Amount of catalyst residue (calculated value) | | Amount of catalyst residue (experimental value) | | Catalyst residue removal efficiency | |
|---|---|---|---|---|---|---|---|---|
| | Left-hand side | Right-hand side | Mg (wtppm) | Cl (wtppm) | Mg (wtppm) | Cl (wtppm) | Mg (%) | Cl (%) |
| Comparative Example 1 | 11.1 | 8.5 | 4 | 12 | 0.7 | 2.8 | 81 | 77 |
| Comparative Example 2 | 10.7 | 8.5 | 4 | 13 | 1.0 | 2.8 | 77 | 78 |
| Comparative Example 3 | 10.2 | 8.5 | 4 | 13 | 0.8 | 2.5 | 82 | 80 |
| Example 1 | 9.3 | 8.5 | 13 | 37 | 6.0 | 17 | 53 | 54 |
| Comparative Example 4 | 9.2 | 8.5 | 10 | 30 | 3.7 | 9.0 | 64 | 70 |
| Comparative Example 5 | 8.8 | 8.5 | 12 | 34 | 5.0 | 11 | 57 | 68 |
| Comparative Example 6 | 9.1 | 8.5 | 13 | 37 | 7.3 | 13 | 42 | 65 |
| Example 2 | 9.5 | 9.2 | 15 | 44 | 7.1 | 14 | 53 | 68 |
| Example 3 | 9.5 | 9.2 | 15 | 45 | 6.0 | 12 | 61 | 73 |
| Comparative Example 7 | 9.9 | 9.2 | 16 | 47 | 6.0 | 14 | 63 | 70 |
| Comparative Example 8 | 10.8 | 9.2 | 10 | 29 | 0.9 | 2.0 | 91 | 93 |
| Example 4 | 10.2 | 9.2 | 10 | 29 | 1.8 | 5.0 | 82 | 83 |
| Comparative Example 9 | 6.5 | 8.5 | 12 | 34 | 9.6 | 21 | 18 | 38 |
| Comparative Example 10 | 7.6 | 8.5 | 11 | 33 | 8.6 | 17 | 24 | 48 |
| Comparative Example 11 | 8.3 | 8.5 | 4 | 12 | 2.7 | 7.0 | 34 | 42 |
| Comparative Example 12 | 8.4 | 8.5 | 14 | 42 | 11 | 23 | 25 | 45 |
| Comparative Example 13 | 8.3 | 9.2 | 15 | 43 | 12 | 30 | 18 | 30 |

IPA: Isopropyl alcohol

BuOEtOH: 2-Butoxyethanol

**Industrial Applicability**

According to the present invention, a method for producing a propylene polymer, the method being capable of conveniently and sufficiently reducing a catalyst residue in a propylene polymer, can be provided.

**Claims**

1. A method for producing a propylene polymer, the method comprising the following step (1) and the following step (2):

   step (1):
   a step of polymerizing propylene in the presence of a catalyst to obtain a propylene polymer;
   step (2):

   a step of washing the propylene polymer obtained in step (1) with a deashing agent at 20°C to 100°C to remove a catalyst residue in the propylene polymer, the step satisfying the following formula (1):

   $$4.4 \times \log(T) - \log(EW) > 0.34 \times (\delta(W) - \delta(E)) \qquad (1)$$

   wherein T represents a temperature (°C) at the time of washing the propylene polymer with the deashing agent;
   EW represents a water content (wt%) in the deashing agent, and the EW is 0.01% by weight or more and 0.1% by weight or less;
   $\delta(W)$ represents a Hansen solubility parameter of water; and
   $\delta(E)$ represents a Hansen solubility parameter of the deashing agent,

   wherein the catalyst used in step (1) is a catalyst obtained by contacting a solid catalyst for olefin polymerization with a co-catalyst, and the solid catalyst for olefin polymerization contains titanium, magnesium, a halogen atom and an internal electron donor.

2. The method for producing a propylene polymer according to claim **1,** wherein the $\delta(E)$ is 18 to 28.

3. The method for producing a propylene polymer according to claim 1 or 2,
   wherein the deashing agent is an alcohol having 1 to 6 carbon atoms.

**Patentansprüche**

1. Verfahren zum Herstellen eines Propylenpolymers, wobei das Verfahren den folgenden Schritt (1) und den folgenden Schritt (2) umfasst:

   Schritt (1):
   einen Schritt des Polymerisierens von Propylen in Gegenwart eines Katalysators, um ein Propylenpolymer zu erhalten;
   Schritt (2):

   ein Schritt des Waschens des in Schritt (1) erhaltenen Propylenpolymers mit einem Entaschungsmittel bei 20 °C bis 100 °C, um einen Katalysatorrückstand in dem Propylenpolymer zu entfernen, wobei der Schritt die folgende Formel (1) erfüllt:

   $$4{,}4 \times \log(T) - \log(EW) > 0{,}34 \times (\delta(W) - \delta(E)) \qquad (1)$$

   wobei T eine Temperatur (°C) zum Zeitpunkt des Waschens des Propylenpolymers mit dem Entaschungsmittel darstellt;
   EW einen Wassergehalt (Gewichts-%) im Entaschungsmittel darstellt und EW 0,01 Gewichts-% oder mehr und 0,1 Gewichts-% oder weniger beträgt;
   $\delta(W)$ einen Hansen-Löslichkeitsparameter von Wasser darstellt; und
   $\delta(E)$ einen Hansen-Löslichkeitsparameter des Entaschungsmittels darstellt, wobei der in Schritt (1) verwendete Katalysator ein Katalysator ist, der durch Inkontaktbringen eines festen Katalysators für Olefinpolymerisation mit einem CoKatalysator erhalten wird, und der feste Katalysator für Olefinpolymerisation Titan, Magnesium, ein Halogenatom und einen internen Elektronendonor enthält.

**2.** Verfahren zum Herstellen eines Propylenpolymers gemäß Anspruch 1, wobei $\delta(E)$ 18 bis 28 beträgt.

**3.** Verfahren zum Herstellen eines Propylenpolymers gemäß Anspruch 1 oder 2, wobei das Entaschungsmittel ein Alkohol mit 1 bis 6 Kohlenstoffatomen ist.

**Revendications**

**1.** Procédé de production d'un polymère de propylène, le procédé comprenant l'étape suivante (1) et l'étape suivante (2) :

étape (1) :
une étape de polymérisation du propylène en présence d'un catalyseur pour obtenir un polymère de propylène ;
étape (2) :

une étape de lavage du polymère de propylène obtenu à l'étape (1) avec un agent de décendrage à 20 °C à 100 °C pour éliminer un résidu de catalyseur dans le polymère de propylène, l'étape satisfaisant à la formule suivante (1) :

$$4,4 \times \log(T) \ - \ \log(EW) \ > \ 0,34 \times (\delta(W) \ - \ \delta(E)) \qquad (1)$$

dans lequel T représente une température (°C) au moment du lavage du polymère de propylène avec l'agent de décendrage ;
EW représente une teneur en eau (% en poids) dans l'agent de décendrage, et l'EW est de 0,01 % en poids ou plus et de 0,1 % en poids ou moins ;
$\delta(W)$ représente un paramètre de solubilité de Hansen de l'eau ; et $\delta(E)$ représente un paramètre de solubilité de Hansen de l'agent de décendrage,

dans lequel le catalyseur utilisé à l'étape (1) est un catalyseur obtenu en mettant en contact un catalyseur solide pour la polymérisation des oléfines avec un cocatalyseur et le catalyseur solide pour la polymérisation des oléfines contient du titane, du magnésium, un atome d'halogène et un donneur d'électrons interne.

**2.** Procédé de production d'un polymère de propylène selon la revendication 1, dans lequel le $\delta(E)$ est de 18 à 28.

**3.** Procédé de production d'un polymère de propylène selon la revendication 1 ou 2, dans lequel l'agent de décendrage est un alcool présentant 1 à 6 atomes de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S60139708 A
- JP 2010059262 A
- EP 0023018 A1
- EP 0069461 A1
- JP 49087783 A
- US 6825146 B
- WO 1998044009 A
- WO 2003000754 A
- WO 2003000757 A
- WO 2003085006 A
- JP H04368391 A
- JP H0374341 A
- JP 8073388 A
- WO 2013058193 A
- JP 2950168 B
- JP 2006096936 A
- JP 2009173870 A
- JP 2010168545 A

**Non-patent literature cited in the description**

- **CHARLES M. HANSEN**. Hansen Solubility Parameters: A Users Handbook. CRC Press, 2007